# EUROPEAN PATENT APPLICATION

(11) **EP 4 760 219 A2**
(43) Date of publication of application: **17.06.2026**
(21) Application number: 25207152.7
(22) Date of filing: 07.10.2025
(51) Int. Cl.: G01G 19/07

(54) **AIRCRAFT WEIGHT DETECTION AND MANAGEMENT SYSTEM**

(30) Priority: 16.12.2024 US 202418983020
(71) Applicant: The Boeing Company, Arlington, VA 22202 (US)
(72) Inventor: SANTOSO, Robert, Arlington (US); TALEQANI, Mohammad, Arlington (US)
(74) Representative: St Clair Jones, Gregory Arthur Langley

(57) **Abstract**

Examples are disclosed that relate to a weight detection and management system for an aircraft. In one example, the system includes a plurality of weight sensors, a communication network connected to the plurality of weight sensors, and a computing system. The plurality of weight sensors is distributed throughout the aircraft. Each weight sensor of the plurality of weight sensors is configured to output weight data that indicates a weight of a load detected by the weight sensor. The computing system includes a logic subsystem and a storage subsystem holding instructions executable by the logic subsystem to receive, via the communication network, the weight data output by the plurality of weight sensors, calculate a center of gravity of the aircraft based at least on the weight data output by the plurality of weight sensors, and output the center of gravity of the aircraft.

## Description

### FIELD

The present disclosure relates generally to the field of aircraft, and more specifically to measuring a center of gravity of an aircraft.

### BACKGROUND

The center of gravity of an aircraft influences stability, performance, and control of the aircraft. The center of gravity of an aircraft is defined as the specific point where the entire weight of the aircraft is considered to act, regardless of its actual distribution. Accurate calculation and monitoring of the center of gravity help to provide for safe and efficient flight operations.

The center of gravity calculation process involves measuring and summing the distribution of mass (fuel, cargo, passengers, etc.) along the length of the aircraft, then balancing these values relative to the aircraft's reference point (datum). The resulting calculation yields the longitudinal and lateral center of gravity positions, which are checked against design specifications of the aircraft. Conventional center of gravity calculations rely on manual input of load and balance data from operators or crew members, often requiring labor-intensive pre-flight calculations based on load manifests and fuel levels.

### SUMMARY

Examples are disclosed that relate to a weight detection and management system for an aircraft. In one example, the system includes a plurality of weight sensors, a communication network connected to the plurality of weight sensors, and a computing system. The plurality of weight sensors are distributed throughout the aircraft. Each weight sensor of the plurality of weight sensors is configured to output weight data that indicates a weight of a load detected by the weight sensor. The computing system includes a logic subsystem and a storage subsystem holding instructions executable by the logic subsystem to receive, via the communication network, the weight data output by the plurality of weight sensors, calculate a center of gravity of the aircraft based at least on the weight data output by the plurality of weight sensors, and output the center of gravity of the aircraft.

The features that have been discussed can be achieved independently in various embodiments or may be combined in yet other embodiments further details of which can be seen with reference to the following description and drawings.

### BRIEF DESCRIPTION OF THE DRAWINGS

FIG. 1 shows an example aircraft comprising a weight detection and management system of the present disclosure.
FIG. 2 shows a first subset of weight sensors of the weight detection and management system distributed throughout a cabin area of the aircraft of FIG. 1.
FIG. 3 schematically shows an aircraft passenger seat comprising an integrated weight sensor.
FIG. 4 shows a second subset of weight sensors of the weight detection and management system distributed throughout a cargo area of the aircraft of FIG. 1.
FIG. 5 schematically shows an example weight detection and management system of the present disclosure.
FIG. 6 shows an example computer-implemented method for detecting and managing weight of an aircraft.
FIG. 7 shows an example computing system.

### DETAILED DESCRIPTION

As mentioned above, accurate calculation and monitoring of the center of gravity help to provide for safe and efficient flight operations. The center of gravity calculation process involves measuring and summing the distribution of mass (fuel, cargo, passengers, etc.) along the aircraft's length, then balancing these values relative to the aircraft's reference point (datum). The resulting calculation yields the longitudinal and lateral center of gravity positions, which are checked against design specifications of the aircraft.

Conventional methods for calculating the center of gravity of an aircraft rely on manual input of load and balance data from operators or crew members, often requiring labor-intensive pre-flight calculations based on load manifests and fuel levels. More particularly, passenger weights are estimated based on average passenger weights determined by designated standards, such as the National Health and Nutrition Examination Survey (NHANES), conducted by the Centers for Disease Control (CDC).

The conventional methods for calculating the center of gravity of an aircraft are prone to errors and can result in imprecise weight and balance calculations. For example, overestimation of load weight due to the estimated average passenger weight differing from the actual weight of the passenger aboard the aircraft can cause an aircraft to be filled with excess fuel. The loading of excess fuel onto the aircraft can increase operational costs and reduce operational efficiency of the aircraft. Furthermore, manual weighing and adjustments of loads on the aircraft can be time-consuming, cause delays, inconvenience passengers, and negatively impact operational efficiency.

Thus, examples are disclosed that relate to a weight detection and management system for an aircraft. In one example, the system includes a plurality of weight sensors, a communication network connected to the plurality of weight sensors, and a computing system. The plurality of weight sensors is distributed throughout the aircraft. Each weight sensor of the plurality of weight sensors is configured to output weight data that indicates a weight of a load detected by the weight sensor. The computing system includes a logic subsystem and a storage subsystem holding instructions executable by the logic subsystem to receive, via the communication network, the weight data output by the plurality of weight sensors, calculate a center of gravity of the aircraft based at least on the weight data output by the plurality of weight sensors, and output the center of gravity of the aircraft.

The weight detection and management system can provide a reliable, automated approach for calculating and adjusting the center of gravity of the aircraft dynamically in real-time. More particularly, by distributing the plurality of weight sensors throughout the aircraft in areas where loads can reside during flight, the weight of each load can be accurately detected in real-time by the plurality of weight sensors. Further, the computing system receives the weight data from the plurality of weight sensors and calculates the center of gravity of the aircraft based at least on the weight data in a manner that is more accurate than a conventional approach that relies on estimates of the average weight of passengers and requires manual inputting of weight data, thereby potentially saving fuel, reducing operational costs, and increasing operational efficiency of the aircraft.

Whenever user information, such as the weight of the user, is collected, the user information is collected with the utmost respect for user privacy (e.g., user information is only collected after the user owning the information provides affirmative consent). Whenever information is stored, accessed, and/or processed, the information is handled in accordance with privacy and/or security standards to which the user has opted in. Prior to user information being collected, users may designate how the information is to be used and/or stored, and user information may only be used for the specific, objective-driven purposes for which the user has opted in. All potentially sensitive information optionally may be encrypted and/or, when feasible anonymized or pseudo-anonymized, to further protect user privacy. Users may optionally designate portions of data, metadata, or statistics/results of processing data for release to specific, user-selected other parties, e.g., for further processing. Information that is private and/or confidential may be kept completely private, e.g., only decrypted temporarily for processing, or only decrypted for processing on a user device and otherwise stored in encrypted form. User information may be permanently deleted after being processed for the purpose of calculating the center of gravity of the aircraft.

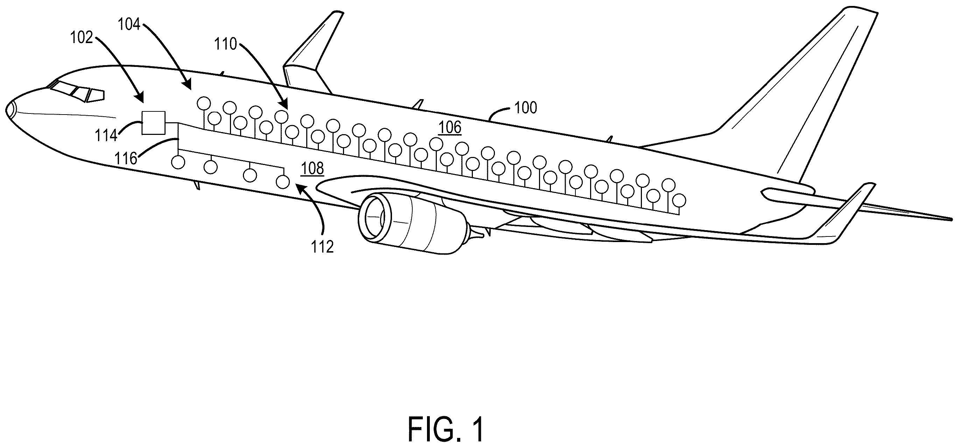

FIG. 1 shows an example aircraft 100 comprising a weight detection and management system 102 of the present disclosure (referred to herein as the "system"). The system 102 comprises a plurality of weight sensors 104 distributed throughout the aircraft 100. More particularly, the aircraft 100 includes a cabin area 106 and a cargo area 108. A first subset of weight sensors 110 of the plurality of weight sensors 104 is integrated into passenger seats and luggage bins in the cabin area 106. A second subset of weight sensors 112 of the plurality of weight sensors 104 is integrated into the floor of the cargo area 108. Each weight sensor of the plurality of weight sensors 104 is configured to output weight data that indicates a weight of a load detected by the weight sensor. A suitable number of weight sensors can be distributed to suitable locations throughout the aircraft 100 to detect the weight of loads on the aircraft 100. As used herein, the term "load" refers to passengers, cargo, fuel, and other objects that contribute additional weight beyond the weight of the aircraft 100 itself and that factor into the calculation of the center of gravity of the aircraft 100.

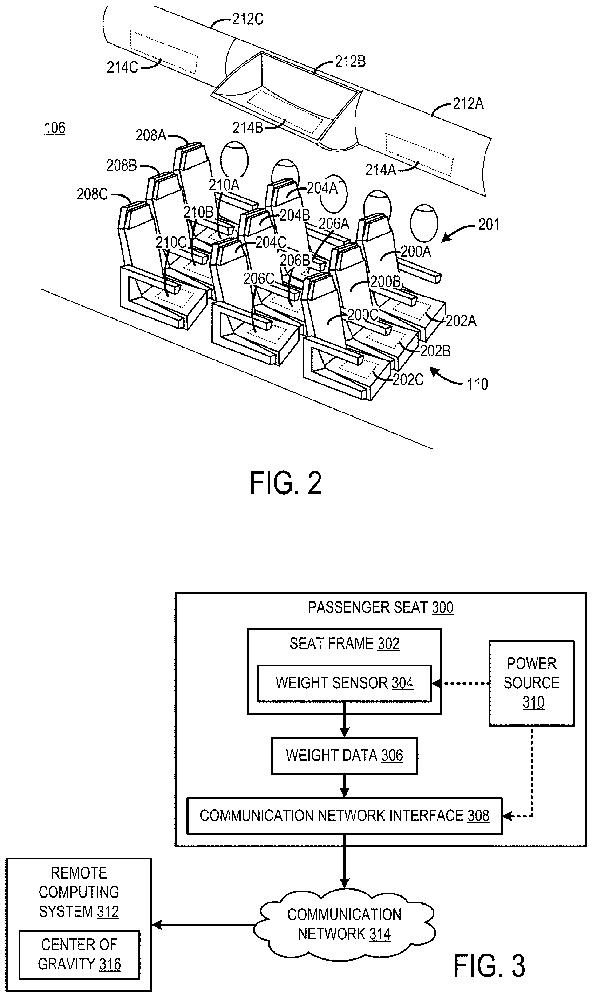

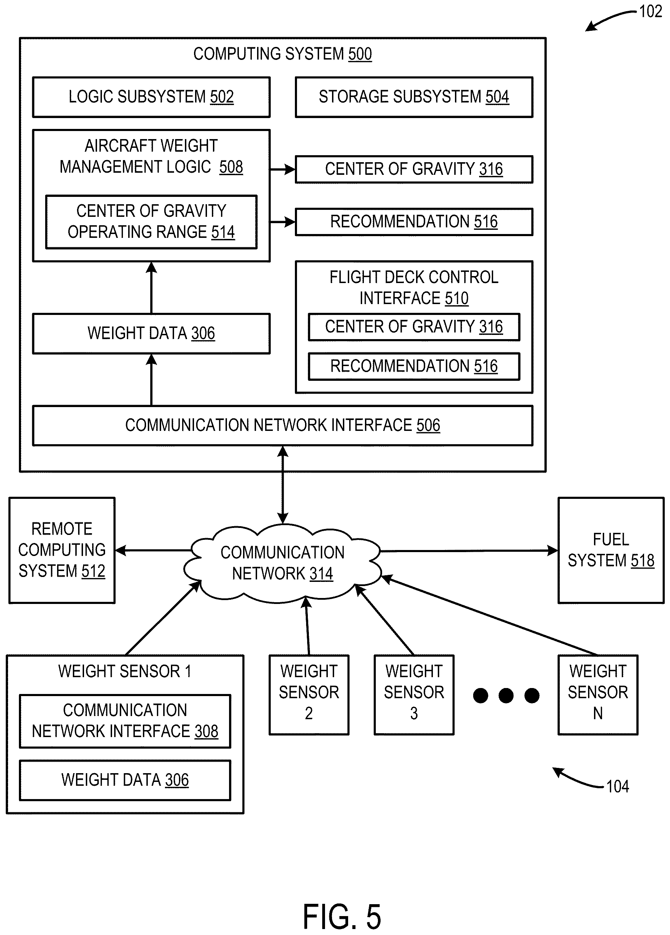

The system 102 comprises a computing system 114 that is connected to the plurality of weight sensors 104 via a communication network 116. The computing system 114 is configured to receive weight data 306 (shown in FIGS. 3 and 5) that is output by the plurality of weight sensors 104 via the communication network 116. The computing system 114 is configured to (i) calculate a center of gravity 316 (shown in FIGS. 3 and 5) of the aircraft 100 based at least on the weight data 306 output by the plurality of weight sensors 104 and (ii) output the center of gravity 316 of the aircraft 100. The center of gravity 316 calculated by the system 102 provides a real-time assessment of the center of gravity of the aircraft that is more accurate that conventional methods for determining the center of gravity that rely on estimations of the weights of loads aboard the aircraft that have to be manually tabulated. The concepts described herein are applicable to any suitable type of aircraft that carries loads that can be weighed including passengers and/or cargo.

FIG. 2 shows a portion of the cabin area 106 of the aircraft 100 including example weight sensors of the first subset of weight sensors 110 of the weight detection and management system 102. The cabin area 106 comprises a plurality of passenger seats 201 arranged in rows. In a first row, a first passenger seat 200A comprises a corresponding first weight sensor 202A, a second passenger seat 200B comprises a corresponding second weight sensor 202B, and a third passenger seat 200C comprises a corresponding third weight sensor 202C. In a second row, a first passenger seat 204A comprises a corresponding first weight sensor 206A, a second passenger seat 204B comprises a corresponding second weight sensor 206B, and a third passenger seat 204C comprises a corresponding third weight sensor 206C. In a third row, a first passenger seat 208A comprises a corresponding first weight sensor 210A, a second passenger seat 208B comprises a corresponding second weight sensor 210B, and a third passenger seat 208C comprises a corresponding third weight sensor 210C. Each of the weight sensors 202A, 202B, 202C, 206A, 206B, 206C, 210A, 210B, 210C is configured to output weight data indicating a weight of a passenger based at least on the passenger sitting in the corresponding passenger seat.

Furthermore, the cabin area 106 comprises a plurality of luggage bins 212A, 212B, 212C. Each luggage bin of the plurality of luggage bins 212A, 212B, 212C comprises an integrated weight sensor. More particularly, the luggage bin 212A comprises a corresponding weight sensor 214A, the luggage bin 212B comprises a corresponding weight sensor 214B, and the luggage bin 212C comprises a corresponding weight sensor 214C. Each of the weight sensors 214A, 214B, 214C is configured to output weight data indicating a weight of luggage stowed in the corresponding luggage bin.

The cabin area 106 of the aircraft 100 may include additional weight sensors distributed in other suitable locations to measure the weight of other loads stowed in the cabin area 106. For example, weight sensors may be distributed throughout galleys and lavatories of the cabin area 106 to measure the weight of other loads (e.g., food and beverages, toiletries) that are stowed in those parts of the cabin area 106.

FIG. 3 schematically shows a passenger seat 300 for the aircraft 100. For example, the passenger seat 300 may be representative of any of the passenger seats 200A, 200B, 200C, 204A, 204B, 204C, 208A, 208B, 208C shown in FIG. 2 or any other passenger seats in the aircraft 100 shown in FIG. 1.

The passenger seat 300 comprises a seat frame 302 that is configured to support a passenger. A weight sensor 304 is coupled to the seat frame 302. The weight sensor 304 is configured to output weight data 306 indicating a weight of a passenger based at least on the passenger sitting in the passenger seat 300. The passenger seat 300 further comprises a communication network interface 308 that is electrically connected to the weight sensor 304. The passenger seat 300 further comprises a power source 310 that is configured to supply electrical power to the weight sensor 304 and the communication network interface 308. The communication network interface 308 is configured to receive the weight data 306 output from the weight sensor 304 and transmit the weight data 306 to a remote computing system 312 via a communication network 314. The remote computing system 312 is configured to calculate a center of gravity 316 of the aircraft 100 based at least on the weight data 306 received from the passenger seat 300. More particularly, in one example, the remote computing system 312 is configured to calculate the center of gravity 316 of the aircraft 100 using the actual load (e.g., including passenger weights, cargo weights, and current fuel weight) of the aircraft 100 indicated by the weight data 306 that is output from the plurality of weight sensors 104 distributed throughout the aircraft 100. In some examples, the remote computing system 312 is a computing system of the aircraft 100. In other examples, the remote computing system 312 is a portable device used by the ground crew.

In some examples, the weight sensor 304 is a thin film load cell that is made with a thin layer of material that can measure weight without adding significant mass to the structure of the passenger seat. Example materials that may be used for the thin film load cell include composite materials and metals, such as alloy steel, stainless steel, aluminum, and beryllium copper. The thin film load cell can be manufactured in a relatively small size, allowing for the thin film load cell to be easily integrated into the passenger seats without impacting comfort or design. Moreover, the thin film load cell is designed to withstand frequent use and harsh conditions, which is beneficial for components used in aircraft environments. Once calibrated and installed, the thin film load cell requires minimal maintenance, which is beneficial for use in commercial aircraft where downtime for maintenance is minimal. Thin film load cells can be designed and certified to meet aviation standards, ensuring they comply with aircraft safety and operational regulations. By utilizing thin film load cells, the system can achieve a high degree of accuracy in weight measurement with minimal impact on the overall weight and structure of the passenger seats that supports enhanced operational efficiency by enabling more precise weight distribution and balance calculations.

In some examples, the thin film load cell uses strain gauge technology that converts mechanical force of weight applied to the thin film load cell into an electrical signal (e.g., the weight data 306). The electrical signal can then be transmitted electronically via the communication network 314 to the remote computing system 312.

In some examples, the communication network 314 is configured to enable wireless communication between the weight sensor 304 and the remote computing system 312. Incorporating wireless technology, such as Bluetooth or Wi-Fi modules, within the passenger seat 300 and/or the weight sensor 304 can enable real-time data transmission without the need for physical wiring, reducing installation complexity, and maintenance of the system 102.

In other examples, the communication network 314 is configured to enable wired communication between the weight sensor 304 and the remote computing system 312. For example, the communication network 314 can incorporate wired connections, such as Ethernet or a controller area network (CAN) bus. The wired communication network can be more reliable and robust relative to the wireless communication network.

The weight sensor 304 can be connected to existing electronic systems of the aircraft 100 through communication network interface 308 and integrated into a larger sensor network within the aircraft 100, such that the weight sensor 304 can contribute to various operational metrics beyond just weight.

The weight sensors 214A, 214B, 214C (shown in FIG. 2) that are integrated into the luggage bins 212A, 212B, 212C can be implemented in an analogous manner as the weight sensor 304 shown in FIG. 3. In some examples, the weight sensors 214A, 214B, 214C comprise thin film load cells. In some examples, the weight sensors 214A, 214B, 214C are electrically connected to an electrical power source and the communication network 314 via a communication network interface.

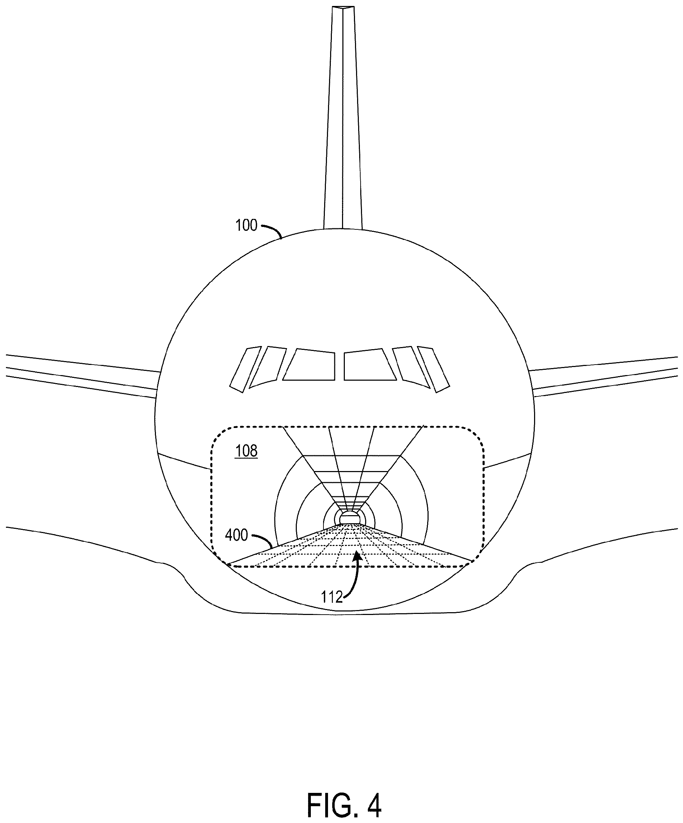

FIG. 4 shows a cut-out view of the cargo area 108 of the aircraft 100. The cargo area 108 includes a floor 400 that is configured to accommodate cargo, such as checked luggage, musical instruments, sports equipment (e.g., skis, golf clubs), and pets. In other types of aircraft, such as dedicated cargo aircraft or military aircraft, the cargo area can be configured to accommodate general freight (e.g., boxes, pallets), perishable items (e.g., fresh produce, seafood, or flowers, often in temperature-controlled containers), machinery, vehicles, aircraft parts (e.g., airplane engines or turbine blades), ammunition, weapons, and military equipment, rations and medical supplies for field operations, and humanitarian aid (e.g., food, water, medicine, and emergency supplies).

The second subset of weight sensors 112 is integrated into the floor 400 of the cargo area 108. In some examples, the weight sensors of the second subset 112 are integrated into platform scales embedded in the floor 400. In some examples, the weight sensors of the second subset 112 comprise piezoelectric load cells. The piezoelectric load cells are suitable for high load environments, such as the floor 400 of the cargo area 108. By integrating piezoelectric load cells into the floor 400 of the cargo area 108, accurate measurements of weight of cargo loaded into the cargo area 108 can be obtained in an efficient and automated manner that supports enhanced operational efficiency by enabling more precise weight distribution and balance calculations.

The piezoelectric load cells can generate a charge in response to applied stress, which is converted into an electrical signal that is transmitted via the communication network 314 to a remote computing system. In some examples, the weight sensors of the second subset 112 are connected to the communication network 314 via a wired connection, such as Ethernet or a CAN bus. In other examples, the weight sensors of the second subset 112 are connected to the communication network 314 via a wireless connection, such as Bluetooth or Wi-Fi. The connection of the weight sensors of the second subset 112 to the communication network 314 allows for real-time data transmission to a remote computing system in a same or analogous manner as described with reference to the weight sensor 304 shown in FIG. 3.

In some examples, weight sensors of the plurality of weight sensors 104 can be distributed to other locations on the aircraft 100 to measure the weight of other types of loads on the aircraft 100. In some examples, the plurality of weight sensors 104 include weight sensors that are located in fuel tank(s) of the aircraft 100 to measure the weight of fuel in the aircraft 100. In other examples, the weight of fuel added to the aircraft 100 is pre-calculated based on the amount of fuel that is added to the fuel tank(s) or can be calculated based on the amount of fuel in the fuel tank(s) as measured by fuel sensor(s). The weight of the fuel can be included in the weight data 306 that is sent to the remote computing system 312 and factored into the calculation of the center of gravity 316 of the aircraft 100.

FIG. 5 is a schematic block diagram of the weight detection and management system 102 of the present disclosure (referred to herein as the "system"). The system 102 comprises the plurality of weight sensors 104 that distributed throughout the aircraft 100. Each weight sensor of the plurality of weight sensors 104 is configured to output weight data 306 that indicates a weight of a load detected by the weight sensor.

The system further comprises the communication network 314 that is connected to the plurality of weight sensors 104. In the illustrated example, a first weight sensor that is representative of the plurality of weight sensors 104 comprises a communication network interface 308 that enables the first weight sensor to send the weight data 306 to a computing system 500 via the communication network 314. The other weight sensors (e.g., 2-N) of the plurality of weight sensors 104 include the same components and operates in the same manner as the first weight sensor to send weight data to the computing system 500. In some examples the computing system 500 is representative of the remote computing system 312 shown in FIG. 3.

The computing system 500 comprises a logic subsystem 502 and a storage subsystem 504. The storage subsystem 504 holds instructions executable by the logic subsystem 502 to perform computing operations relating to control of the aircraft 100 shown in FIG. 1. More particularly, storage subsystem 504 holds instructions executable by the logic subsystem 502 to perform computing operations relating to weighing and balancing loads on the aircraft 100.

The computing system 500 comprises a communication network interface 506 that is configured to connect the computing system 500 with the plurality of weight sensors 104 via the communication network 314, such that the plurality of weight sensors can send the weight data 306 to the computing system 500.

The storage subsystem 504 holds instructions executable by the logic subsystem 502 to execute aircraft weight management logic 508. The aircraft weight management logic 508 is configured to receive the weight data 306 output by the plurality of weight sensors 104 via the communication network 314. The weight data 306 indicates a weight of a load detected by each of the plurality of weight sensors 104. The aircraft weight management logic 508 is configured to calculate a center of gravity 316 of the aircraft 100 based at least on the weight data 306 output by the plurality of weight sensors 104.

In one example, the aircraft weight management logic 508 calculates the center of gravity 316 of the aircraft 100 as a percentage of a length of a mean aerodynamic chord (MAC) of the aircraft 100. The MAC of the aircraft 100 is a calculated average chord length of a wing of the aircraft 100, representing a single chord that would produce the same aerodynamic forces as the actual complex shape of the wing. To determine the center of gravity 316 as a percentage of MAC, the aircraft weight management logic 508 measures the distance from the leading edge of the MAC to the position of the center of gravity 316, then divides that distance by the total length of the MAC and expresses the result as a percentage. The center of gravity 316 calculated as a percentage of the length of the MAC indicates how far back the center of gravity 316 is positioned relative to the position of the MAC of the wing. For example, if the aircraft has a MAC of 100 inches and its center of gravity is located 25 inches behind the leading edge of the MAC, then its center of gravity is said to be at "25% MAC". In other examples, the aircraft weight management logic 508 can calculate the center of gravity 316 of the aircraft 100 in a different manner.

The aircraft weight management logic 508 is configured to output the center of gravity 316 of the aircraft 100. In one example, the aircraft weight management logic 508 is configured to output the center of gravity 316 of the aircraft 100 to a flight deck control interface 510 that is located in a cockpit of the aircraft 100. In some examples, the flight deck control interface 510 includes a display that visually presents the center of gravity 316 of the aircraft 100 to inform a pilot or crew of the center of gravity 316 of the aircraft 100 in real-time. In this way, the pilot or crew can be made aware of the current center of gravity 316 of the aircraft 100 and make manual adjustments to the position of loads (e.g., passengers, luggage) in the cabin area 106 and/or the cargo area 108 to adjust the center of gravity 316 of the aircraft 100, as necessary.

In another example, the aircraft weight management logic 508 is configured to output the center of gravity 316 of the aircraft 100 to a remote computing system 512 to inform a ground crew at an airport of the current center of gravity 316 of the aircraft 100. As one example, the remote computing system 512 is a hand-held device that provides aircraft operating information to the ground crew. In another example, the remote computing system 512 is a stationary computer in a terminal of the airport that can be viewed by the ground crew. By outputting the center of gravity 316 of the aircraft 100 to the remote computing system 512, the ground crew can be made aware of the center of gravity 316 of the aircraft 100 and make manual adjustments to loads in the cargo area 108 of the aircraft 100 to adjust the center of gravity 316, as necessary.

Furthermore, the aircraft weight management logic 508 is configured to compare the calculated center of gravity 316 to a designated center of gravity operating range 514 of the aircraft 100. The center of gravity operating range 514 of the aircraft 100 defines a range of possible center of gravity values that support stable flight of the aircraft 100. The center of gravity operating range 514 may differ from aircraft to aircraft based on various design factors.

The aircraft weight management logic 508 is configured to, based on the center of gravity 316 of the aircraft 100 being outside the center of gravity operating range 514 of the aircraft 100, output a recommendation 516 to adjust a distribution of weight in the aircraft 100 to move the center of gravity 316 of the aircraft 100 to within the designated center of gravity operating range 514 of the aircraft 100.

As an example, the recommendation 516 can specify a redistribution of the load in the aircraft 100 to move the center of gravity 316 of the aircraft 100 to within the designated center of gravity operating range 514 of the aircraft 100. As another example, the recommendation 516 can alternatively or additionally specify moving passengers and/or carry-on luggage (e.g., forward or aft) in the cabin area 106 of the aircraft 100 to adjust the center of gravity 316 of the aircraft 100 to within the designated center of gravity operating range 514 of the aircraft 100.

As a further example, the recommendation 516 can specify moving checked luggage (e.g., forward or aft) in the cargo area 108 of the aircraft 100 to adjust the center of gravity 316 of the aircraft 100 to within the designated center of gravity operating range 514 of the aircraft 100.

As yet another example, the recommendation 516 can specify a redistribution of fuel in the aircraft 100 to move the center of gravity 316 of the aircraft 100 to within the designated center of gravity operating range 514 of the aircraft 100. For example, fuel may be redistributed between different fuel tanks on the aircraft 100 to move the center of gravity 316 of the aircraft 100 to within the designated center of gravity operating range 514 of the aircraft 100.

As yet a further example, the recommendation 516 can specify an adjustment of an amount of fuel in the aircraft 100 to move the center of gravity 316 of the aircraft 100 to within the designated center of gravity operating range 514 of the aircraft 100. For example, the aircraft 100 can be loaded with a pre-determined amount of fuel, and the actual weight of the passengers on the aircraft is less than expected, so some amount of fuel can be offloaded to accommodate for the variance between the expected weight of the passengers and the actual weight of the passengers as measured by the plurality of weight sensors 104.

The recommendation 516 can include any suitable adjustment to any suitable load on the aircraft 100 to change the center of gravity 316 of the aircraft 100.

In one example, the aircraft weight management logic 508 is configured to output the recommendation 516 to the flight deck control interface 510 to inform the pilot or crew and allow the pilot or crew to make manual adjustments to the position of loads (e.g., passengers, carry-on luggage) in the cabin area 106 to adjust the center of gravity 316 of the aircraft 100 to within the center of gravity operating range 514.

In another example, the aircraft weight management logic 508 is configured to output the recommendation 516 to the remote computing system 512 to inform the ground crew and allow the ground crew to make manual adjustments to the position of loads (e.g., checked luggage) in the cargo area 108 to adjust the center of gravity 316 of the aircraft 100 to within the center of gravity operating range 514.

In these examples, because the aircraft weight management logic 508 calculates the center of gravity 316 dynamically in real-time, the pilot, crew, and/or ground crew can observe the center of gravity 316 being updated in real-time to provide feedback as the pilot, crew, and/or ground crew make adjustments to loads of the aircraft 100. In this way, the center of gravity 316 can be adjusted to within the center of gravity operating range 514 in accurate and efficient manner.

In yet another example, the aircraft weight management logic 508 is configured to output the recommendation 516 to a fuel system 518 of the aircraft 100. In this example, the recommendation 516 may include commands that are executable by the fuel system 518 to redistribute or adjust an amount of fuel in the aircraft 100 to adjust the center of gravity 316 of the aircraft 100 to within the center of gravity operating range 514. In some examples the fuel system 518 redistributes or adjusts the amount of fuel in the aircraft 100 in an automated manner without human intervention base at least on the recommendation 516.

In some examples, the aircraft weight management logic 508 is configured to output the recommendation 516 even if the center of gravity 316 is within the center of gravity operating range 514. More particularly, the recommendation 516 may specify a desired (e.g., ideal) center of gravity of the aircraft 100 that balances the aircraft 100 for efficient operation. In some examples, the recommendation 516 may specify a smaller center of gravity operating range within the larger center of gravity operating range 514. The smaller center of gravity operating range may specify a range where the aircraft 100 can operate more efficiently relative to the larger center of gravity operating range 514. The loads of the aircraft 100 can be adjusted in any suitable manner to adjust the center of gravity 316 to within the smaller center of gravity operating range and/or the desired center of gravity.

An example process for weighing and balancing loads on the aircraft 100 using the weight detection and management system 102 will be discussed herein. Optionally, the aircraft operator manually performs weight and balance calculations for the aircraft 100 based on an estimated number of passengers and cargo. The weight and balance calculations use average weights for the estimated number of passengers and cargo. An initial load and trim sheet is issued based on the estimated passenger and cargo weights and distribution in the aircraft 100 to calculate an estimated amount of fuel. The estimated amount of fuel is uplifted to the aircraft 100.

Next, the cargo is loaded into the cargo area 108 of the aircraft. The passengers are loaded into the cabin area 106 of the aircraft 100. Once the passengers are seated in the passenger seats, the plurality of weight sensors 104 output the weight data 306 indicating the actual weight of the passengers and cargo (and any other loads detected by the weight sensors) on-board the aircraft 100. The plurality of weight sensors transmit the weight data 306 directly to the computing system 500 via the communication network 314.

The aircraft weight management logic 508 processes the received weight data 306 in real-time to calculate the center of gravity 316 and other weight and balance data of the aircraft 100. The aircraft weight management logic 508 compares the center of gravity 316 against the center of gravity operating range 514 to ensure compliance. The calculated weight and balance data are also checked for compliance. If the calculated the center of gravity 316 (and/or weight and balance data) are outside the acceptable operating range, the aircraft weight management logic 508 issues a recommendation that alerts the flight crew to make necessary (fuel/ cargo distribution) adjustments to adjust the center of gravity 316 to a desired center of gravity location. For example, excess fuel may be off-loaded, or additional fuel may be uplifted based on a difference between the estimated weight of the loads on the aircraft 100 and the measured weight of the loads on the aircraft 100.

The flight plan is updated based on the adjusted center of gravity 316 and updated weight and balance calculations to ensure stable and efficient operation of the aircraft 100. The updated flight plan is approved by the flight crew. Once the center of gravity 316 and the weight and balance data are verified and the flight plan is updated accordingly, the aircraft is cleared for departure. The center of gravity 316 and the weight and balance data, along with any adjustments made, are logged for record-keeping and future analysis.

The system 102 provides a significant advantage over traditional methods for calculating the center of gravity of an aircraft by ensuring more accurate and efficient aircraft operations. Moreover, the system 102 contributes to better environmental practices by optimizing fuel consumption based on precise load assessments that are based on measurements as opposed to estimates.

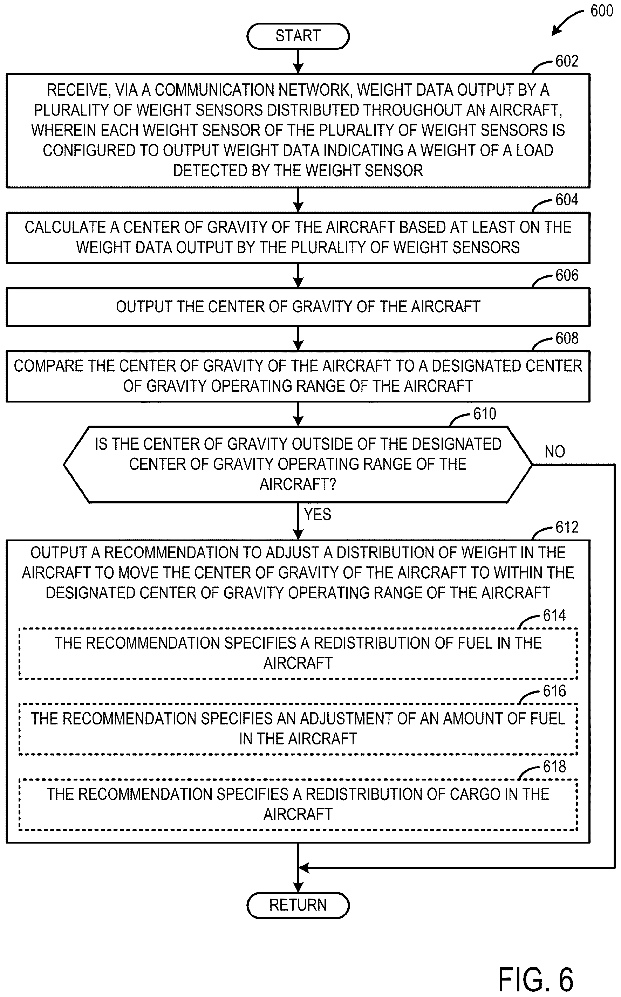

FIG. 6 shows an example computer-implemented method 600 for detecting and managing weight of an aircraft. For example, the computer-implemented method 600 can be performed by the remote computing system 312 shown in FIG. 3, the computing system 500 shown in FIG. 5, or another suitable computing system on-board or off-board the aircraft 100 shown in FIG. 1. Note that the method steps indicated by dotted lines may be optionally performed in some examples.

At 602, the computer-implemented method 600 includes receiving, via a communication network, weight data output by a plurality of weight sensors distributed throughout the aircraft, wherein each weight sensor of the plurality of weight sensors is configured to output weight data indicating a weight of a load detected by the weight sensor. At 604, the computer-implemented method 600 includes calculating a center of gravity of the aircraft based at least on the weight data output by the plurality of weight sensors. At 606, the computer-implemented method 600 includes outputting the center of gravity of the aircraft. At 608, the computer-implemented method 600 includes comparing the center of gravity of the aircraft to a designated center of gravity operating range of the aircraft. At 610, the computer-implemented method 600 includes determining whether the center of gravity is outside of the designated center of gravity operating range of the aircraft. If it is determined that the center of gravity of the aircraft is outside of the designated center of gravity operating range of the aircraft, then the computer-implemented method moves to 612. Otherwise, the computer-implemented method is complete, and the computing system returns to performing other computing operations. At 612, the computer-implemented method 600 includes outputting a recommendation to adjust a distribution of weight in the aircraft to move the center of gravity of the aircraft to within the designated center of gravity operating range of the aircraft. In some examples, at 614, the recommendation specifies a redistribution of fuel in the aircraft to move the center of gravity of the aircraft to within the designated center of gravity operating range of the aircraft. In some examples, at 616, the recommendation specifies an adjustment of an amount of fuel in the aircraft to move the center of gravity of the aircraft to within the designated center of gravity operating range of the aircraft. In some examples, the recommendation specifies a redistribution of cargo in the aircraft to move the center of gravity of the aircraft to within the designated center of gravity operating range of the aircraft.

The computer-implemented method 600 can be performed to measure the weight of loads on an aircraft in real-time to determine a center of gravity of the aircraft. The computer-implemented method 600 provides a more accurate assessment of the center of gravity of the aircraft relative to methods that estimate weights of loads to estimate a center of gravity of an aircraft. Moreover, the computer-implemented method 600 provides a recommendation when appropriate to adjust the center of gravity of the aircraft to facilitate stable and efficient operation of the aircraft.

The methods and processes described herein can be tied to a computing system of one or more computing devices. In particular, such methods and processes can be implemented as an executable computer-application program, a network-accessible computing service, an application-programming interface (API), a library, or a combination of the above and/or other computing resources.

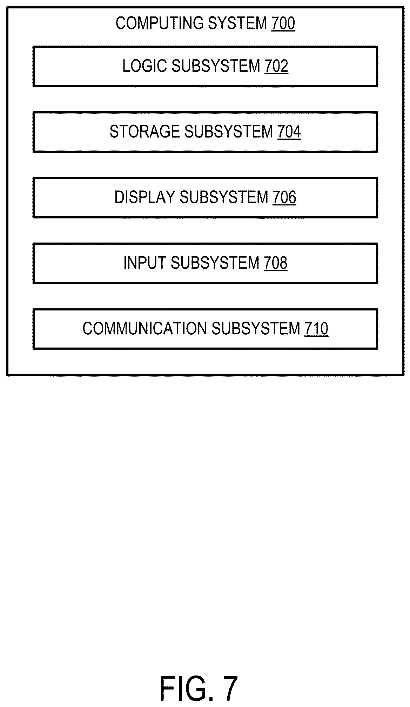

FIG. 7 schematically shows a simplified representation of a computing system 700 configured to provide any to all of the computing functionality described herein. Computing system 700 can take the form of one or more embedded controllers, personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices. For example, the computing system 700 can be representative of the computing system 114 shown in FIG. 1, the remote computing system 312 shown in FIG. 3, the computing system 500 shown in FIG. 5, and the remote computing system 512 shown in FIG. 5.

Computing system 700 includes a logic subsystem 702 and a storage subsystem 704. Computing system 700 can optionally include a display subsystem 706, input subsystem 708, communication subsystem 710, and/or other subsystems not shown in FIG. 7.

Logic subsystem 702 includes one or more physical devices configured to execute instructions. For example, the logic subsystem can be configured to execute instructions that are part of one or more applications, services, or other logical constructs. The logic subsystem can include one or more hardware processors configured to execute software instructions. Additionally, or alternatively, the logic subsystem can include one or more hardware or firmware devices configured to execute hardware or firmware instructions. Processors of the logic subsystem can be single-core or multi-core, and the instructions executed thereon can be configured for sequential, parallel, and/or distributed processing. Individual components of the logic subsystem optionally can be distributed among two or more separate devices, which can be remotely located and/or configured for coordinated processing. Aspects of the logic subsystem can be virtualized and executed by remotely-accessible, networked computing devices configured in a cloud-computing configuration.

Storage subsystem 704 includes one or more physical devices configured to temporarily and/or permanently hold computer information such as data and instructions executable by the logic subsystem. When the storage subsystem includes two or more devices, the devices can be collocated and/or remotely located. Storage subsystem 704 can include volatile, nonvolatile, dynamic, static, read/write, read-only, random-access, sequential-access, location-addressable, file-addressable, and/or content-addressable devices. Storage subsystem 704 can include removable and/or built-in devices. When the logic subsystem executes instructions, the state of storage subsystem 704 can be transformed - e.g., to hold different data.

Aspects of logic subsystem 702 and storage subsystem 704 can be integrated together into one or more hardware-logic components. Such hardware-logic components can include program- and application-specific integrated circuits (PASIC / ASICs), program- and application-specific standard products (PSSP / ASSPs), system-on-a-chip (SOC), and complex programmable logic devices (CPLDs), for example.

The logic subsystem 702 and the storage subsystem 704 can cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine can be instantiated by a single computing device, or a machine can include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality can optionally be saved as one or more unexecuted modules on one or more suitable storage devices.

The term "logic" can be used to describe an aspect of computing system 700 typically implemented in software by a processor to perform a particular function using portions of volatile memory, which function involves transformative processing that specially configures the processor to perform the function. Thus, logic can be instantiated via the logic subsystem 702 executing instructions held by storage subsystem 704. It will be understood that different logic can be instantiated from the same application, service, code block, object, library, routine, API, function, etc. Likewise, the same logic can be instantiated by different applications, services, code blocks, objects, routines, APIs, functions, etc. The term "logic" can encompass individual or groups of executable files, data files, libraries, drivers, scripts, database records, etc.

When included, display subsystem 706 can be used to present a visual representation of data held by storage subsystem 704. This visual representation can take the form of a graphical user interface (GUI). Display subsystem 706 can include one or more display devices utilizing virtually any type of technology. In some implementations, display subsystem can include one or more virtual-, augmented-, or mixed reality displays.

When included, input subsystem 708 can comprise or interface with one or more input devices. An input device can include a sensor device or a user input device. Examples of user input devices include a keyboard, mouse, touch screen, or game controller. In some examples, the input subsystem can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 710 can be configured to communicatively couple computing system 700 with one or more other computing devices. Communication subsystem 710 can include wired and/or wireless communication devices compatible with one or more different communication protocols. The communication subsystem can be configured for communication via personal-, local- and/or wide-area networks.

Further, the disclosure comprises configurations according to the following examples.

In an example, a weight detection and management system for an aircraft comprises a plurality of weight sensors distributed throughout the aircraft, wherein each weight sensor of the plurality of weight sensors is configured to output weight data that indicates a weight of a load detected by the weight sensor, a communication network connected to the plurality of weight sensors, and a computing system, comprising, a logic subsystem, and a storage subsystem holding instructions executable by the logic subsystem to receive, via the communication network, the weight data output by the plurality of weight sensors, calculate a center of gravity of the aircraft based at least on the weight data output by the plurality of weight sensors; and output the center of gravity of the aircraft. In this example and/or other examples, at least one weight sensor of the plurality of weight sensors may be integrated into passenger seats of the aircraft. In this example and/or other examples, at least one weight sensor of the plurality of weight sensors may be positioned in a cargo area of the aircraft. In this example and/or other examples, at least one weight sensor of the plurality of weight sensors may be positioned in a luggage bin of the aircraft. In this example and/or other examples, at least one weight sensor of the plurality of weight sensors may be at least one of a thin-film load cell and piezoelectric load cell. In this example and/or other examples, the communication network may be configured to enable wireless communication between at least one weight sensor of the plurality of weight sensors and the computing system. In this example and/or other examples, the communication network may be configured to enable wired communication between at least one weight sensor of the plurality of weight sensors and the computing system. In this example and/or other examples, the storage subsystem may hold instructions executable by the logic subsystem to compare the center of gravity of the aircraft to a designated center of gravity operating range of the aircraft, and based at least on the calculated center of gravity being outside of the designated center of gravity operating range of the aircraft, output a recommendation to adjust a distribution of weight in the aircraft to move the center of gravity of the aircraft to within the designated center of gravity operating range of the aircraft. In this example and/or other examples, the recommendation may specify a redistribution of fuel in the aircraft to move the center of gravity of the aircraft to within the designated center of gravity operating range of the aircraft. In this example and/or other examples, the recommendation may specify an adjustment of an amount of fuel in the aircraft to move the center of gravity of the aircraft to within the designated center of gravity operating range of the aircraft. In this example and/or other examples, the recommendation may specify a redistribution of the load in the aircraft to move the center of gravity of the aircraft to within the designated center of gravity operating range of the aircraft.

In another example, a computer-implemented method for detecting and managing weight of an aircraft comprises receiving, via a communication network, weight data output by a plurality of weight sensors distributed throughout the aircraft, wherein each weight sensor of the plurality of weight sensors is configured to output weight data indicating a weight of a load detected by the weight sensor, calculating a center of gravity of the aircraft based at least on the weight data output by the plurality of weight sensors, and outputting the center of gravity of the aircraft. In this example and/or other examples, at least one weight sensor of the plurality of weight sensors may be integrated into passenger seats of the aircraft. In this example and/or other examples, at least one weight sensor of the plurality of weight sensors may be positioned in a cargo area of the aircraft. In this example and/or other examples, at least one weight sensor of the plurality of weight sensors may be positioned in a luggage bins of the aircraft. In this example and/or other examples, the computer-implemented method may further comprise comparing the center of gravity of the aircraft to a designated center of gravity operating range of the aircraft, and based at least on the calculated center of gravity being outside of the designated center of gravity operating range of the aircraft, outputting a recommendation to adjust a distribution of weight in the aircraft to move the center of gravity of the aircraft to within the designated center of gravity operating range of the aircraft. In this example and/or other examples, the recommendation may specify a redistribution of fuel in the aircraft to move the center of gravity of the aircraft to within the designated center of gravity operating range of the aircraft. In this example and/or other examples, the recommendation may specify an adjustment of an amount of fuel in the aircraft to move the center of gravity of the aircraft to within the designated center of gravity operating range of the aircraft. In this example and/or other examples, the recommendation may specify a redistribution of cargo in the aircraft to move the center of gravity of the aircraft to within the designated center of gravity operating range of the aircraft.

In yet another example, a passenger seat for an aircraft comprises a seat frame configured to support a passenger, a weight sensor coupled to the seat frame and configured to output weight data indicating a weight of the passenger based at least on the passenger sitting in the passenger seat, and a communication network interface configured to receive the weight data output from the weight sensor and transmit the weight data to a remote computing system, wherein the remote computing system is configured to calculate a center of gravity of the aircraft based at least on the weight data.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

The description includes the following clauses:
1. A weight detection and management system for an aircraft, the system comprising:
   a plurality of weight sensors distributed throughout the aircraft, wherein each weight sensor of the plurality of weight sensors is configured to output weight data that indicates a weight of a load detected by the weight sensor;
   a communication network connected to the plurality of weight sensors, and
   a computing system, comprising:
      a logic subsystem; and
      a storage subsystem holding instructions executable by the logic subsystem to:
         receive, via the communication network, the weight data output by the plurality of weight sensors;
         calculate a center of gravity of the aircraft based at least on the weight data output by the plurality of weight sensors; and
         output the center of gravity of the aircraft.
2. The system of clause 1, wherein at least one weight sensor of the plurality of weight sensors is integrated into passenger seats of the aircraft.
3. The system of clause 1 or clause 2, wherein at least one weight sensor of the plurality of weight sensors is positioned in a cargo area of the aircraft.
4. The system of any of clauses 1 to 3, wherein at least one weight sensor of the plurality of weight sensors is positioned in a luggage bin of the aircraft.
5. The system of any of clauses 1 to 4, wherein at least one weight sensor of the plurality of weight sensors is at least one of a thin-film load cell and piezoelectric load cell.
6. The system of any of clauses 1 to 5, wherein the communication network is configured to enable wireless communication between at least one weight sensor of the plurality of weight sensors and the computing system.
7. The system of any of clauses 1 to 6, wherein the communication network is configured to enable wired communication between at least one weight sensor of the plurality of weight sensors and the computing system.
8. The system of any of clauses 1 to 7, wherein the storage subsystem holds instructions executable by the logic subsystem to:
   compare the center of gravity of the aircraft to a designated center of gravity operating range of the aircraft; and
   based at least on the calculated center of gravity being outside of the designated center of gravity operating range of the aircraft, output a recommendation to adjust a distribution of weight in the aircraft to move the center of gravity of the aircraft to within the designated center of gravity operating range of the aircraft.
9. The system of clause 8, wherein the recommendation specifies a redistribution of fuel in the aircraft to move the center of gravity of the aircraft to within the designated center of gravity operating range of the aircraft.
10. The system of clause 8 or clause 9, wherein the recommendation specifies an adjustment of an amount of fuel in the aircraft to move the center of gravity of the aircraft to within the designated center of gravity operating range of the aircraft.
11. The system of any of clauses 8 to 10, wherein the recommendation specifies a redistribution of the load in the aircraft to move the center of gravity of the aircraft to within the designated center of gravity operating range of the aircraft.
12. A computer-implemented method for detecting and managing weight of an aircraft, the computer-implemented method comprising:
   receiving, via a communication network, weight data output by a plurality of weight sensors distributed throughout the aircraft, wherein each weight sensor of the plurality of weight sensors is configured to output weight data indicating a weight of a load detected by the weight sensor;
   calculating a center of gravity of the aircraft based at least on the weight data output by the plurality of weight sensors; and
   outputting the center of gravity of the aircraft.
13. The computer-implemented method of clause 12, wherein at least one weight sensor of the plurality of weight sensors is integrated into passenger seats of the aircraft.
14. The computer-implemented method of clause 12 or clause 13, wherein at least one weight sensor of the plurality of weight sensors is positioned in a cargo area of the aircraft.
15. The computer-implemented method of any of clauses 12 to 14, wherein at least one weight sensor of the plurality of weight sensors is positioned in a luggage bins of the aircraft.
16. The computer-implemented method of any of clause 12 to 15, further comprising:
   comparing the center of gravity of the aircraft to a designated center of gravity operating range of the aircraft; and
   based at least on the calculated center of gravity being outside of the designated center of gravity operating range of the aircraft, outputting a recommendation to adjust a distribution of weight in the aircraft to move the center of gravity of the aircraft to within the designated center of gravity operating range of the aircraft.
17. The computer-implemented method of clause 16, wherein the recommendation specifies a redistribution of fuel in the aircraft to move the center of gravity of the aircraft to within the designated center of gravity operating range of the aircraft.
18. The computer-implemented method of clause 16 or clause 17, wherein the recommendation specifies an adjustment of an amount of fuel in the aircraft to move the center of gravity of the aircraft to within the designated center of gravity operating range of the aircraft.
19. The computer-implemented method of any of clauses 16 to 18, wherein the recommendation specifies a redistribution of cargo in the aircraft to move the center of gravity of the aircraft to within the designated center of gravity operating range of the aircraft.
   19A. A (optionally non-transitory) computer-readable storage medium having program code embodied therewith, the program code executable by any combination of one or more processors to cause the one or more processors to perform the computer-implemented method of any of clauses 12 to 19.
20. A passenger seat for an aircraft, comprising:
   a seat frame configured to support a passenger;
   a weight sensor coupled to the seat frame and configured to output weight data indicating a weight of the passenger based at least on the passenger sitting in the passenger seat; and
   a communication network interface configured to receive the weight data output from the weight sensor and transmit the weight data to a remote computing system, wherein the remote computing system is configured to calculate a center of gravity of the aircraft based at least on the weight data.

## Claims

1. A weight detection and management system (102) for an aircraft (100), the system comprising:
a plurality of weight sensors (104) distributed throughout the aircraft (100), wherein each weight sensor of the plurality of weight sensors (104) is configured to output weight data (306) that indicates a weight of a load detected by the weight sensor;
a communication network (314) connected to the plurality of weight sensors (104), and
a computing system (500), comprising:
a logic subsystem (502); and
a storage subsystem (504) holding instructions executable by the logic subsystem (502) to:
receive, via the communication network (314), the weight data (306) output by the plurality of weight sensors (104);
calculate a center of gravity (316) of the aircraft (100) based at least on the weight data (306) output by the plurality of weight sensors (104); and
output the center of gravity (306) of the aircraft (100).

2. The system (102) of claim 1, wherein at least one weight sensor of the plurality of weight sensors (104) is integrated into passenger seats (200A, 200B, 200C) of the aircraft (100).

3. The system (102) of claim 1 or claim 2, wherein at least one weight sensor of the plurality of weight sensors (104) is positioned in a cargo area (108) of the aircraft (100).

4. The system (102) of any of claims 1 to 3, wherein at least one weight sensor of the plurality of weight sensors (104) is positioned in a luggage bin (212A, 212B, 212C) of the aircraft (100).

5. The system (102) of any of claims 1 to 4, wherein at least one weight sensor of the plurality of weight sensors (104) is at least one of a thin-film load cell and piezoelectric load cell.

6. The system (102) of any of claims 1 to 5, wherein the communication network (314) is configured to enable wireless communication between at least one weight sensor of the plurality of weight sensors (104) and the computing system (500).

7. The system (102) of any of claims 1 to 6, wherein the communication network (314) is configured to enable wired communication between at least one weight sensor of the plurality of weight sensors (104) and the computing system (500).

8. The system (102) of any of claims 1 to 7, wherein the storage subsystem (504) holds instructions executable by the logic subsystem (502) to:
compare the center of gravity (316) of the aircraft (100) to a designated center of gravity operating range (514) of the aircraft (100); and
based at least on the calculated center of gravity (316) being outside of the designated center of gravity operating range (514) of the aircraft (100), output a recommendation (516) to adjust a distribution of weight in the aircraft (100) to move the center of gravity (316) of the aircraft (100) to within the designated center of gravity operating range (514) of the aircraft (100).

9. The system (102) of claim 8, wherein the recommendation (516) specifies a redistribution of fuel in the aircraft (100) to move the center of gravity (316) of the aircraft (100) to within the designated center of gravity operating range (514) of the aircraft (100).

10. The system (102) of claim 8 or claim 9, wherein the recommendation (516) specifies an adjustment of an amount of fuel in the aircraft (100) to move the center of gravity (316) of the aircraft (100) to within the designated center of gravity operating range (514) of the aircraft (100).

11. The system (102) of any of claims 8 to 10, wherein the recommendation (516) specifies a redistribution of the load in the aircraft (100) to move the center of gravity (316) of the aircraft (100) to within the designated center of gravity operating range (514) of the aircraft (100).

12. A computer-implemented method (600) for detecting and managing weight of an aircraft (100), the computer-implemented method (600) comprising:
receiving, via a communication network (314), weight data (306) output by a plurality of weight sensors (104) distributed throughout the aircraft (100), wherein each weight sensor of the plurality of weight sensors (104) is configured to output weight data (306) indicating a weight of a load detected by the weight sensor;
calculating a center of gravity (316) of the aircraft (100) based at least on the weight data (306) output by the plurality of weight sensors (104); and
outputting the center of gravity (316) of the aircraft (100).

13. The computer-implemented method (600) of claim 12, wherein at least one weight sensor of the plurality of weight sensors (104) is integrated into passenger seats (200A, 200B, 200C) of the aircraft (100), and/or wherein at least one weight sensor of the plurality of weight sensors (104) is positioned in a cargo area (108) of the aircraft (100), and/or, wherein at least one weight sensor of the plurality of weight sensors (104) is positioned in a luggage bin (212A, 212B, 212C) of the aircraft (100).

14. The computer-implemented method (600) of claim 12 or claim 13, further comprising:
comparing the center of gravity (316) of the aircraft (100) to a designated center of gravity operating range (514) of the aircraft (100); and
based at least on the calculated center of gravity (316) being outside of the designated center of gravity operating range (514) of the aircraft (100), outputting a recommendation (516) to adjust a distribution of weight in the aircraft (100) to move the center of gravity (316) of the aircraft (100) to within the designated center of gravity operating range (514) of the aircraft (100), optionally,
wherein the recommendation (516) specifies a redistribution of fuel in the aircraft (100) to move the center of gravity (316) of the aircraft (100) to within the designated center of gravity operating range (514) of the aircraft (100), and/or,
wherein the recommendation (516) specifies an adjustment of an amount of fuel in the aircraft (100) to move the center of gravity (316) of the aircraft (100) to within the designated center of gravity operating range (514) of the aircraft (100), and/or,
wherein the recommendation (514) specifies a redistribution of cargo in the aircraft (100) to move the center of gravity (316) of the aircraft (100) to within the designated center of gravity operating range (514) of the aircraft (100).

15. A passenger seat (300) for an aircraft (100), comprising:
a seat frame (302) configured to support a passenger;
a weight sensor (304) coupled to the seat frame (302) and configured to output weight data (306) indicating a weight of the passenger based at least on the passenger sitting in the passenger seat (300); and
a communication network interface (100) configured to receive the weight data (306) output from the weight sensor (304) and transmit the weight data (360) to a remote computing system (312), wherein the remote computing system (312) is configured to calculate a center of gravity (316) of the aircraft (100) based at least on the weight data (306).
